# EUROPÄISCHE PATENTSCHRIFT

(11) **EP 0 899 133 B1**
(45) Veröffentlichungstag und Bekanntmachung des Hinweises auf die Patenterteilung: **16.10.2002**
(21) Anmeldenummer: 98112878.8
(22) Anmeldetag: 10.07.1998
(51) Int. Cl.: B60G 3/26

(54) **Einzelradaufhängung einer Hinterachse**
Independent wheel suspension unit for a rear axle
Suspension à roue indépendante pour un essieu arrière

(30) Priorität: 29.08.1997 DE 19737715
(43) Veröffentlichungstag der Anmeldung: 03.03.1999
(73) Patentinhaber: Volkswagen Aktiengesellschaft, 38436 Wolfsburg (DE)
(72) Erfinder: Kopp, Thilo, 38162 Klein Schöppenstedt (DE)

(56) Entgegenhaltungen:
- EP-A- 0 556 464
- DE-A- 3 633 789
- DE-A- 4 120 894
- DE-C- 3 507 081
- US-A- 4 696 488

## Beschreibung

Die Erfindung bezieht sich auf eine Einzelradaufhängung mit den Merkmalen des Oberbegriffes von Patentanspruch 1.

Eine derartige Einzelradaufhängung ist aus der EP 0 556 464 A2 bekannt. Bei dieser Einzelradaufhängung ist der Längslenker über weiche Lagerungen sowohl mit der Karosserie des Fahrzeuges, als auch mit dem Radträger derart verbunden, daß eine Kippbewegung von 1° bis 2° um seine Hochachse möglich ist. Der vordere untere Querlenker ist oberhalb des Längslenkers angeordnet und übernimmt die Funktion einer Spurstange für die Führung des ungelenkten Radträgers. Der hintere untere Querlenker und der obere Querlenker dienen zur Aufnahme der Lagerkräfte und zur Einstellung des Sturzes während der Federbewegungen des Fahrzeugaufbaus.

Bei der Konstruktion von Hinterachsen mit Einzelradaufhängung hat sich gezeigt, daß es günstig ist, sowohl den Längslenker als auch den vorderen unteren Querlenker möglichst weit unten am Radträger zu lagern. Andererseits kann der Radträger wegen der erforderlichen Bodenfreiheit des Fahrzeuges nicht beliebig weit nach unten gezogen werden, so daß die vertikale Anordnung der Längs- und Querlenker nach unten begrenzt ist. Weil zusätzlich der Längslenker mit einer Lagerung hinter der Radachse am Radträger befestigt ist und so den unteren Bereich des Radträgers überdeckt, kann bislang der als Spurstange wirkende vordere untere Querlenker nur oberhalb des Längslenkers am Radträger gelagert und somit nicht optimal angeordnet werden.

Alternative Aufhängungskonzepte, wie sie beispielsweise in der DE 36 33 789 A1 und der DE 41 20 894 A1 offenbart werden, koppeln einen Querlenker an den Längsträger an.

Aufgabe der Erfindung ist es, eine Einzelradaufhängung zu schaffen, bei der sowohl der Längslenker als auch der vordere untere Querlenker möglichst tief am Radträger gelagert werden können.

Diese Aufgabe wird durch eine Einzelradaufhängung mit den Merkmalen des Patentanspruches 1 gelöst.

Durch die Ausnehmung an dem Längslenker wird der vordere untere Querlenker nun im wesentlichen auf gleicher Höhe mit dem Längslenker an dem Radträger angelenkt werden. Die Ausnehmung ermöglicht ein Durchdringen des vorderen unteren Querlenkers. Dabei kann die Ausnehmung sowohl eine Einkerbung in der Ober- oder Unterseite des Längslenkers als auch eine aufgrund der Spannungsverläufe im Längslenker bevorzugte Durchgangsöffnung in der Mitte des Längslenkers sein.

Der vordere untere Querlenker ist als Druck- oder Zugstange zur Lagerung und Führung des Radträgers ausgebildet. Weil die Hauptquerkräfte der Radlagerung von dem deutlich schwereren und massiveren hinteren Querlenker aufgenommen werden, kann der vordere untere Querlenker verhältnismäßig schlank ausgeführt sein, wodurch die Größe der Ausnehmung begrenzt bleibt. Diese muß jedoch so ausreichend dimensioniert sein, daß während des vollständigen Federweges des Rades eine Berührung des vorderen unteren Querlenkers mit dem Längslenker ausgeschlossen ist. Hierzu kann je nach Änderung der Geometrien der Radaufhängung während des Einfederns, also je nach Änderung zum Beispiel des Sturzes oder der Vorspur, die Ausnehmung die Form eines Langloches, einer Ellipse oder einer Bohrung haben.

Der Längslenker ist wie der hintere, meist auch gegen die Wirkung der Fahrzeugfederung verschwenkbare Querlenker im Gegensatz zu den übrigen Querlenkern verhältnismäßig groß ausgeführt, da er im wesentlichen die durch Antrieb, Stöße und Bremsvorgänge hervorgerufenen Längskräfte und Drehmomente beziehungsweise Biegemomente der Radaufhängung aufnimmt. Zur Reduzierung der ungefederten Massen des Fahrzeuges sollte der Längslenker belastungsoptimiert ausgelegt und konstruiert werden. Zur Kompensation der Schwächung des Längslenkers durch die Ausnehmung zur Durchführung des vorderen unteren Querlenkers kann die Außenkontur des Längslenkers entsprechend verstärkt werden, wobei die Verstärkung aus einer Verdickung der Oberfläche in vertikaler oder horizontaler Querrichtung bestehen kann. Im Falle, daß die Ausnehmung von einer einseitig offenen Einkerbung gebildet ist, kann auch die beispielsweise U-förmige Oberfläche der Einkerbung entsprechend dicker ausgeführt sein.

Ein bevorzugter Längslenker weist einen im wesentlichen "doppel-T"-förmigen Querschnitt auf und ist in vertikaler Richtung mittig mit der Ausnehmung versehen, wobei der Steg des "doppel-T"-förmigen Längslenkers in Längsrichtung des Längslenkers und vertikal angeordnet ist. Der Bereich des Steges kann durch quer oder winklig verlaufende Verstärkungsrippen zusätzlich verstärkt sein.

Zur weiteren Gewichtseinsparung und zur Vereinfachung der Herstellung wird der Längslenker bevorzugt im Gußverfahren, insbesondere aus Leichtmetall, hergestellt. Bevorzugte Materialen können beispielsweise Aluminium oder Magnesium sein, die im Druckgußverfahren verarbeitet werden können.

Üblicherweise ist der Längslenker über eine zweite Lagerung mit dem Radträger verbunden um Drehmomente aufnehmen zu können. Die Ausnehmung zur Durchführung des vorderen unteren Querlenkers ist in diesen Fall bevorzugt zwischen den beiden Lagerungen des Längslenkers am Radträger angeordnet.

Zur Übertragung der Querkräfte zwischen dem vorderen unteren Querlenker und dem Radträger weist letzterer bevorzugt einen rechtwinklig zur Raddrehfläche hervorragenden Hebel auf, an dem der Querlenker über ein Lager angelenkt ist. Dieser Hebel kann auch in die Ausnehmung des Längslenkers hineinragen, so daß die Lagerung der vorderen unteren Querlenkers innerhalb der Ausnehmung angeordnet ist.

Die einzelnen Querlenker und der Längslenker können unmittelbar an dem Aufbau des Fahrzeuges gelagert sein oder bevorzugt auch mittelbar über einen gesonderten Achsschemel mit dem Aufbau verbunden sein.

Zur Montage der erfindungsgemäßen Einzelradaufhängung wird bevorzugt zunächst der vordere untere Querlenker am Radträger beispielsweise über ein Kugelgelenk befestigt. Dann wird der Längslenker über das noch freie Ende des vorderen unteren Querlenkers geschoben, so daß dieser die Ausnehmung durchdringt und der Längslenker und die weiteren Querlenker über elastische Lager am Radträger befestigt. Der so vormontierte Radträger kann dann zum Beispiel an einem Achsschemel befestigt werden und dieser anschließend mit der Karrosserie verbunden werden.

Weitere Merkmale und Vorteile der Erfindung ergeben sich aus den Unteransprüchen und aus der folgenden Beschreibung bevorzugter Ausführungsbeispiele anhand der Zeichnungen.

Die Zeichnungen zeigen in
- Fig. 1: die wesentlichen Bauteile einer erfindungsgemäßen Einzelradaufhängung in einer schaubildlichen Darstellung und in
- Fig. 2: die Anbindung des vorderen unteren Querlenkers in einer Detailansicht.

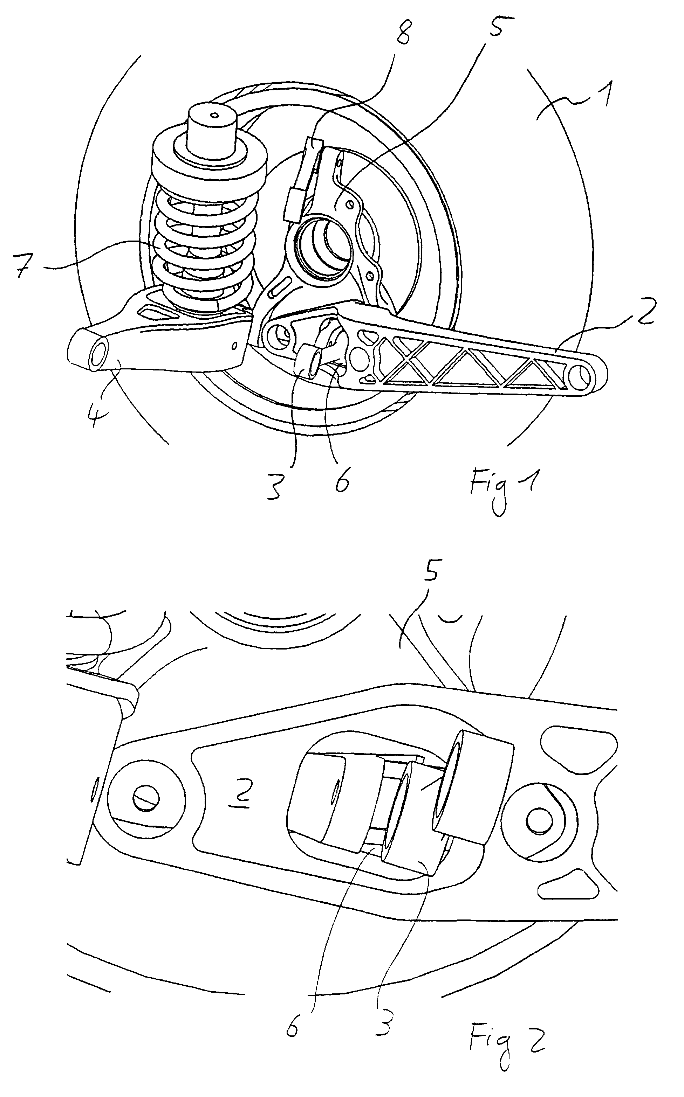

In Figur 1 ist eine erfindungsgemäße Einzelradaufhängung dargestellt, die von einem Längslenker 2, einem oberen Querlenker 8, einem vorderen unteren Querlenker 3 und einem hinteren unteren Querlenker 4 gebildet ist. Die einzelnen Querlenker sind an einem hier zum Zwecke der Übersichtlichkeit nicht dargestellten Achsschemel gelagert, der wiederum mit der Karosserie des Fahrzeuges verbunden ist. Der Längslenker 2 dagegen ist unmittelbar mit dem Aufbau des Fahrzeuges verbunden.

Der Längslenker 2 und der unteren hintere Querlenker 4 werden zusätzlich zu Zug- und Druckkräften mit Biegemomenten belastet. Diese beiden Lenker 2 und 4 sind daher deutlich stabiler ausgebildet als die übrigen Querlenker 3 und 8, die mehr die Funktion von Druckund/oder Zugstangen übernehmen. Der hintere untere Querlenker 4 ist zur Federung des Fahrzeuges gegen die Wirkung einer Schraubenfeder 7 verschwenkbar, in deren Mitte ein Dämpfer angeordnet ist.

Der Längslenker 2 weist eine Ausnehmung 6 auf, durch die der untere, in Fahrtrichtung gesehen vordere Querlenker 3 hindurchgeführt ist. Auf diese Weise kann sowohl der Längslenker 2 als auch der untere vordere Querlenker 3 auf gleicher Höhe am unteren Rand des Radträgers 5 angelenkt werden, wodurch sich einerseits ein günstiges Hebelverhältnis für den als Spurstange wirkenden unteren vorderen Querlenker 3 relativ zur Radachse ergibt und andererseits die aus Gründen der Fahrdynamik gewünschte tiefe Lagerung des Längslenkers möglich bleibt. Der Längslenker 2 ist über zwei Lagerpunkte mit dem Radträger verbunden, von denen einer vor und einer hinter dem unteren vorderen Querlenker angeordnet ist.

In Figur 2 ist die Verbindung des Längslenkers 2 und des vorderen unteren Querlenkers 3 mit dem Radträger 5 in einer detaillierten Ansicht dargestellt. Der Radträger 5 weist einen rechtwinklig hervorspringenden Kraftübertragungshebel auf, der in die Ausnehmung 6 des Längslenkers 2 hineinragt. Über eine weiche Lagerung, beispielsweise einem Gummilager, ist der Kraftübertragungshebel mit dem vorderen unteren Querlenker 3 verbunden.

Der Längslenker 2 ist über zwei Lagerungen mit dem Radträger 5 verbunden, die so elastisch ausgeführt sind, daß der Längslenker um 1° oder 2° um seine Hochachse verkippbar ist. Die Ausnehmung 6 ist so groß gewählt, daß trotz der Bewegungsmöglichkeit des Längslenkers und bei maximaler Bewegung des unteren vorderen Querlenkers 3 eine Berührung zwischen dem Längslenker 2 und dem vorderen unteren Querlenker ausgeschlossen ist.

## Patentansprüche

1. Einzelradaufhängung für ein Hinterrad (1) eines Kraftfahrzeuges mit einem Längslenker (2), wenigstens einem unteren vorderen Querlenker (3) und einem unteren hinteren Querlenker (4), und mit einem Radträger (5) zur Lagerung des Hinterrades (1), der über den Längslenker (2) und die Querlenker (3, 4) mittelbar oder unmittelbar mit einem Fahrzeugaufbau verbunden ist, wobei der Längslenker (2) und der untere hintere Querlenker (4) über jeweils eine in Fahrtrichtung hinter der Radachse angeordnete Lagerung an dem Radträger (5) angelenkt sind, und der untere vordere Querlenker (3) über eine vor der Radachse angeordnete Lagerung an dem Radträger (5) angelenkt ist, **dadurch gekennzeichnet, daß** die Lagerung des Längslenkers (2) und des unteren vorderen Querlenkers (3) am Radträger (5) im wesentlichen auf gleicher Höhe angeordnet sind, und der Längslenker (2) eine Ausnehmung (6) aufweist, durch die der untere vordere Querlenker (3) während des vollständigen Federweges des Hinterrades berührungsfrei hindurchgeführt ist.

2. Einzelradaufhängung nach Anspruch 1, **dadurch gekennzeichnet, daß** die Ausnehmung (6) des Längslenkers (2) vollständig von dem Längslenker (2) umschlossen ist.

3. Einzelradaufhängung nach Anspruch 2, **dadurch gekennzeichnet, daß** die Ausnehmung (6) eine Bohrung ist.

4. Einzelradaufhängung nach Anspruch 2, **dadurch gekennzeichnet, daß** die Ausnehmung (6) ein Langloch ist.

5. Einzelradaufhängung nach einem der Ansprüche 1 bis 4, **dadurch gekennzeichnet, daß** der Längslenker (2) im Bereich der Ausnehmung (6) eine verdickte Außenkontur aufweist.

6. Einzelradaufhängung nach Anspruch 1, **dadurch gekennzeichnet, daß** die Ausnehmung (6) von einer in die Oberseite oder die Unterseite des Längslenkers (2) eingebrachten Einkerbung gebildet ist.

7. Einzelradaufhängung nach einem der Ansprüche 1 bis 6, **dadurch gekennzeichnet, daß** der Längslenker am Fahrzeug und/oder am Radträger in einer weichen Lagerung gelagert ist, die ein Verkippen des Längslenkers um einige Grad zuläßt, wobei die Ausnehmung so dimensioniert ist, daß eine Berühung des unteren vorderen Querlenkers (3) mit dem Längslenker (2) über den vollständigen Einfederweg des Hinterrades (1) ausgeschlossen ist.

8. Einzelradaufhängung nach einem der Ansprüche 1 bis 7, **dadurch gekennzeichnet, daß** der Längslenker über eine zweite, in Fahrtrichtung vor dem unteren vorderen Querlenker (3) angeordnete Lagerung mit den Radträger verbunden ist.

9. Einzelradaufhähngung nach einem der Ansprüche 1 bis 8, **dadurch gekennzeichnet, daß** der Radträger jeweils einen, in Richtung der Fahrzeugmitte hervorspringenden Kraftübertragungshebel zur Anlenkung des vorderen unteren Querlenkers (3) und des hinteren unteren Querlenkers (4) aufweist.

10. Einzelradaufhängung nach Anspruch 9, **dadurch gekennzeichnet, daß** der Kraftübertragungshebel in die Ausnehmung (6) hineinragt und die Lagerung des vorderen unteren Querlenkers (3) innerhalb der Ausnehmung (6) angeordnet ist.

11. Einzelradaufhängung nach einem der Ansprüche 1 bis 10, **dadurch gekennzeichnet, daß** sie zumindest einen oberen Querlenker (8) aufweist, der mit dem Fahrzeug mittelbar oder unmittelbar verbunden ist.

12. Einzelradaufhängung nach Anspruch 11, **dadurch gekennzeichnet, daß** der vordere untere Querlenker (3), der hintere untere Querlenker (4) und der obere Querlenker (8) an einem am Fahrzeug gelagerten Achsschemel angelenkt sind.

13. Einzelradaufhängung nach einem der Ansprüche 1 bis 12, **dadurch gekennzeichnet, daß** die Lagerungen des hinteren unteren Querlenkers (4) und des Längslenkers (2) ausreichend weich ausgebildet sind, daß sie eine geringfügige Gierbewegung des Radträgers zulassen, und der untere vordere Querlenker (3) als spurstangenartig wirkende Zug- oder Druckstange ausgebildet ist.

14. Einzelradaufhängung nach einem der Ansprüche 1 bis 13, **dadurch gekennzeichnet, daß** der untere vordere Querlenker (3) über ein Kugelgelenk mit dem Radträger (5) verbunden ist.

15. Einzelradaufhängung nach einem der Ansprüche 1 bis 14, **dadurch gekennzeichnet, daß** der Längslenker (2) und/oder der untere vordere Querlenker (3) aus einem Leichtmetall, insbesondere Aluminium oder Magnesium oder einer Aluminium- oder Magnesiumlegierung, und insbesondere im Druckgußverfahren hergestellt sind.

16. Verfahren zur Montage einer Einzelradaufhängung nach einem der Ansprüche 1 bis 15, **dadurch gekennzeichnet, daß** zunächst der vordere untere Querlenker (3) am Radträger (5) befestigt wird, dann der Längslenker (2) über das noch freie Ende des vorderen unteren Querlenkers (3) derart eingesetzt wird, daß der vordere untere Querlenker (3) die Ausnehmung (6) durchdringt, dann der Längslenker und die weiteren Querlenker am Radträger befestigt werden und anschließend der vormontierte, mit den Lenkern (2, 3, 4, 8) versehene Radträger mit der Karrosserie bzw. dem Achsschemel verbunden wird.

## Claims

1. Single-wheel suspension for a rear wheel (1) of a motor vehicle, with a longitudinal control arm (2), at least one lower front transverse control arm (3) and one lower rear transverse control arm (4) and with a wheel carrier (5) for mounting the rear wheel (1), said wheel carrier being connected to a vehicle body indirectly or directly via the longitudinal control arm (2) and the transverse control arms (3, 4), the longitudinal control arm (2) and the lower rear transverse control arm (4) being articulated on the wheel carrier (5) in each case via a mounting arranged behind the wheel axle in the direction of travel, and the lower front transverse control arm (3) being articulated on the wheel carrier (5) via a mounting arranged in front of the wheel axle, **characterized in that** the mounting of the longitudinal control arm (2) and that of the lower front transverse control arm (3) on the wheel carrier (5) are arranged at essentially the same height, and the longitudinal control arm (2) has a recess (6), through which the lower front transverse control arm (3) is led, free of contact, during the complete spring excursion of the rear wheel.

2. Single-wheel suspension according to Claim 1, **characterized in that** the recess (6) of the longitudinal control arm (2) is surrounded completely by the longitudinal control arm (2).

3. Single-wheel suspension according to Claim 2, **characterized in that** the recess (6) is a bore.

4. Single-wheel suspension according to Claim 2, **characterized in that** the recess (6) is a long hole.

5. Single-wheel suspension according to one of Claims 1 to 4, **characterized in that** the longitudinal control arm (2) has a thickened outer contour in the region of the recess (6).

6. Single-wheel suspension according to Claim 1, **characterized in that** the recess (6) is formed by an indentation introduced into the top side or the underside of the longitudinal control arm (2).

7. Single-wheel suspension according to one of Claims 1 to 6, **characterized in that** the longitudinal control arm is mounted on the vehicle and/or on the wheel carrier in a soft mounting which allows a tilting of the longitudinal control arm over a few degrees, the recess being dimensioned such that contact of the lower front transverse control arm (3) with the longitudinal control arm (2) is ruled out over the complete compression excursion of the rear wheel (1).

8. Single-wheel suspension according to one of Claims 1 to 7, **characterized in that** the longitudinal control arm is connected to the wheel carrier via a second mounting arranged in front of the lower front transverse control arm (3) in the direction of travel.

9. Single-wheel suspension according to one of Claims 1 to 8, **characterized in that** the wheel carrier has in each case a force transmission lever, projecting in the direction of the vehicle centre, for the articulation of the front lower transverse control arm (3) and of the rear lower transverse control arm (4).

10. Single-wheel suspension according to Claim 9, **characterized in that** the force transmission lever projects into the recess (6) and the mounting of the front lower transverse control arm (3) is arranged within the recess (6).

11. Single-wheel suspension according to one of Claims 1 to 10, **characterized in that** it has at least one upper transverse control arm (8) which is connected indirectly or directly to the vehicle.

12. Single-wheel suspension according to Claim 11, **characterized in that** the front lower transverse control arm (3), the rear lower transverse control arm (4) and the upper transverse control arm (8) are articulated on an axle bolster mounted on the vehicle.

13. Single-wheel suspension according to one of Claims 1 to 12, **characterized in that** the mountings of the rear lower transverse control arm (4) and of the longitudinal control arm (2) are designed to be sufficiently soft to allow a slight yawing movement of the wheel carrier, and the lower front transverse control arm (3) is designed as a pull or push rod acting in the manner of a track rod.

14. Single-wheel suspension according to one of Claims 1 to 13, **characterized in that** the lower front transverse control arm (3) is connected to the wheel carrier (5) via a ball joint.

15. Single-wheel suspension according to one of Claims 1 to 14, **characterized in that** the longitudinal control arm (2) and/or the lower front transverse control arm (3) are produced from a light metal, in particular aluminium or magnesium or an aluminium or magnesium alloy, and, in particular, by the die-casting method.

16. Method for mounting a single-wheel suspension according to one of Claims 1 to 15, **characterized in that**, first, the front lower transverse control arm (3) is fastened to the wheel carrier (5), then the longitudinal control arm (2) is inserted over the still free end of the front lower transverse control arm (3), in such a way that the front lower transverse control arm (3) passes through the recess (6), then the longitudinal control arm and the further transverse control arms are fastened to the wheel carrier, and, subsequently, the premounted wheel carrier provided with the control arms (2, 3, 4, 8) is connected to the body or to the axle bolster.

## Revendications

1. Suspension à roue indépendante pour une roue arrière (1) d'un véhicule à moteur avec un bras oscillant longitudinal (2), au moins un bras oscillant transversal inférieur avant (3) et un bras oscillant transversal inférieur arrière (4), et avec un support de roue (5) destiné à supporter la roue arrière (1), qui est relié directement ou indirectement à un châssis de véhicule par le bras oscillant longitudinal (2) et les bras oscillants transversaux (3, 4), dans laquelle le bras oscillant longitudinal (2) et le bras oscillant transversal inférieur arrière (4) sont articulés au support de roue (5) chaque fois par un appui disposé derrière l'essieu par rapport au sens de la marche, et le bras oscillant transversal inférieur avant (3) est articulé au support de roue (5) par un appui disposé devant l'essieu, **caractérisée en ce que** l'appui du bras oscillant longitudinal (2) et celui du bras oscillant transversal inférieur avant (3) sur le support de roue (5) sont disposés sensiblement à la même hauteur, et le bras oscillant longitudinal (2) présente une découpe (6) à travers laquelle le bras oscillant transversal inférieur avant (3) est mené sans contact pendant toute la course élastique de la roue arrière.

2. Suspension à roue indépendante suivant la revendication 1, **caractérisée en ce que** la découpe (6) du bras oscillant longitudinal (2) est entourée entièrement par le bras oscillant longitudinal (2).

3. Suspension à roue indépendante suivant la revendication 2, **caractérisée en ce que** la découpe (6) est un alésage.

4. Suspension à roue indépendante suivant la revendication 2, **caractérisée en ce que** la découpe (6) est un trou allongé.

5. Suspension à roue indépendante suivant l'une quelconque des revendications 1 à 4, **caractérisée en ce que** le bras oscillant longitudinal (2) présente un contour extérieur renforcé dans la région de la découpe (6).

6. Suspension à roue indépendante suivant la revendication 1, **caractérisée en ce que** la découpe (6) est formée par une entaille ménagée dans le côté supérieur ou le côté inférieur du bras oscillant longitudinal (2).

7. Suspension à roue indépendante suivant l'une quelconque des revendications 1 à 6, **caractérisée en ce que** le bras oscillant longitudinal est appuyé sur le véhicule et/ou sur le support de roue dans un palier souple, qui permet un pivotement du bras oscillant longitudinal de quelques degrés, dans laquelle la découpe est dimensionnée de telle manière qu'un contact du bras oscillant transversal inférieur avant (3) avec le bras oscillant longitudinal (2) soit exclu sur toute la course élastique de la roue arrière (1).

8. Suspension à roue indépendante suivant l'une quelconque des revendications 1 à 7, **caractérisée en ce que** le bras oscillant longitudinal est relié au support de roue par un deuxième appui disposé avant le bras oscillant transversal inférieur avant (3) par rapport au sens de la marche.

9. Suspension à roue indépendante suivant l'une quelconque des revendications 1 à 8, **caractérisée en ce que** le support de roue présente chaque fois un levier de transmission de force saillant en direction du milieu du véhicule pour l'articulation du bras oscillant transversal inférieur avant (3) et du bras oscillant transversal inférieur arrière (4).

10. Suspension à roue indépendante suivant la revendication 9, **caractérisée en ce que** le levier de transmission de force pénètre dans la découpe (6) et l'appui du bras oscillant transversal inférieur avant (3) est disposé à l'intérieur de la découpe (6).

11. Suspension à roue indépendante suivant l'une quelconque des revendications 1 à 10, **caractérisée en ce qu'**elle présente au moins un bras oscillant transversal supérieur (8), qui est relié directement ou indirectement au véhicule.

12. Suspension à roue indépendante suivant la revendication 11, **caractérisée en ce que** le bras oscillant transversal inférieur avant (3), le bras oscillant transversal inférieur arrière (4) et le bras oscillant transversal supérieur (8) sont articulés sur une sellette d'essieu appuyée sur le véhicule.

13. Suspension à roue indépendante suivant l'une quelconque des revendications 1 à 12, **caractérisée en ce que** les appuis du bras oscillant transversal inférieur arrière (4) et du bras oscillant longitudinal (2) sont réalisés de façon suffisamment souple pour qu'ils permettent un léger mouvement de lacet du support de roue, et le bras oscillant transversal inférieur avant (3) a la forme d'une tige de traction ou de compression agissant comme une barre d'accouplement.

14. Suspension à roue indépendante suivant l'une quelconque des revendications 1 à 13, **caractérisée en ce que** le bras oscillant transversal inférieur avant (3) est relié au support de roue (5) par une articulation à rotule.

15. Suspension à roue indépendante suivant l'une quelconque des revendications 1 à 14, **caractérisée en ce que** le bras oscillant longitudinal (2) et/ou le bras oscillant transversal inférieur avant (3) sont fabriqués en un métal léger, en particulier en aluminium ou en magnésium ou en un alliage d'aluminium ou de magnésium, et en particulier par le procédé de coulée sous pression.

16. Procédé pour le montage d'une suspension à roue indépendante suivant l'une quelconque des revendications 1 à 15, **caractérisé en ce que** l'on fixe d'abord le bras oscillant transversal inférieur avant (3) sur le support de roue (5), on introduit ensuite le bras oscillant longitudinal (2) par l'extrémité encore libre du bras oscillant transversal inférieur avant (3) de telle manière que le bras oscillant transversal inférieur avant (3) traverse la découpe (6), puis on fixe le bras oscillant longitudinal et les autres bras oscillants transversaux sur le support de roue, et ensuite on relie le support de roue prémonté, pourvu des bras oscillants (2, 3, 4, 8), à la carrosserie, respectivement à la sellette d'essieu.
